# EUROPÄISCHE PATENTSCHRIFT

(11) **EP 0 631 835 B1**
(45) Veröffentlichungstag und Bekanntmachung des Hinweises auf die Patenterteilung: **12.01.2000**
(21) Anmeldenummer: 94109245.4
(22) Anmeldetag: 16.06.1994
(51) Int. Cl.: B23D 77/04, B23B 27/16

(54) **Zerspanungswerkzeug**
Cutting tool
Outil de coupe

(30) Priorität: 21.06.1993 DE 4320409
(43) Veröffentlichungstag der Anmeldung: 04.01.1995
(73) Patentinhaber: MAPAL Fabrik für Präzisionswerkzeuge Dr. Kress KG, D-73431 Aalen (DE)
(72) Erfinder: Kress, Dieter, Dr., D-73431 Aalen (DE); Häberle, Friedrich, D-73466 Lauchheim (DE)
(74) Vertreter: Gleiss, Alf-Olav, Dr.jur. Dipl.-Ing.

(56) Entgegenhaltungen:
- FR-A- 1 032 529
- FR-A- 2 191 965
- GB-A- 113 831
- GB-A- 271 208
- GB-A- 2 004 211
- US-A- 1 542 007

## Beschreibung

Die Erfindung betrifft ein Zerspanungswerkzeug gemäß Oberbegriff des Anspruchs 1.

Zerspanungswerkzeuge weisen eine Messerplatte auf, die der Oberflächenbearbeitung eines Werkstücks dient. Die Messerplatte wird am Grundkörper des Werkzeugs beispielsweise mit Hilfe einer Spannpratze befestigt, die die in einer Vertiefung angeordnete Messerplatte durch Druck auf die als Messerbrust bezeichnete Messervorderseite festspannt. Dabei ragen die Spannpratzen in den Freiraum, der der Abfuhr der von der Messerplatte abgetragenen Späne dient. Insbesondere bei kleinen Werkzeugdimensionen sind derartige Spannpratzen sehr hinderlich. Sie führen häufig zu einem Spanstau und damit zu einer starken Beeinträchtigung der erzielten Oberflächenqualität.

Aus der FR 10 32 529 ist ein Zerspanungswerkzeug bekannt, das eine am Werkzeugkopf angeordnete Messerplatte aufweist. Die Messerplatte ist mit einer Befestigungseinrichtung gehalten, die als Schnappverriegelung ausgebildet ist, so daß die vorstehend erwähnte Spannpratze nicht verwendet werden muß. Nachteilig bei der aus der FR 10 32 529 bekannten Schnappverriegelung ist allerdings, daß die Messerplatte nicht in allen Fällen sicher im Werkzeugkopf gehalten werden kann.

Es ist daher Aufgabe der Erfindung, ein Zerspanungswerkzeug der gattungsgemäßen Art zu schaffen, bei der die Messerplatte sicher gehalten und dennoch einfach am Werkzeugkopf befestigbar ist.

Diese Aufgabe wird mit einem Zerspanungswerkzeug gelöst, das die Merkmale des Anspruchs 1 aufweist. Erfindungsgemäß weist die Messerplatte des Zerspanungswerkzeugs mindestens eine Verriegelungsfläche auf. In einer die Messerplatte zumindest teilweise aufnehmenden Vertiefung ist in eine Seitenfläche eine Vertiefung eingebracht, in der ein gegen eine nachgiebige Kraft verlagerbares, die Verriegelungsfläche mit einer Verriegelungskraft beaufschlagendes Verriegelungselement untergebracht ist. Dadurch, daß die Messerplatte die Verriegelungsfläche aufweist, auf die das Verriegelungselement wirkt, wird einerseits ein sicher Halt der Messerplatte im Werkzeugkopf gewährleistet. Andererseits kann die Messerplatte dennoch auf einfache Art und Weise im Werkzeugkopf befestigt werden. Da die Verriegelungsfläche auch an den seitlichen Begrenzungsflächen der Messerplatte ausgebildet sein kann, muß lediglich eine Ausnehmung im Werkzeugkopf für die Messerplatte vorgesehen werden. Dies ist insbesondere bei sehr kleinen Durchmessern des Zerspanungswerkzeugs vorteilhaft, weil damit keine Schwächung des Werkzeugkopfs eintritt.

Alternativ ist es jedoch möglich, an der Messerplatte einen Vorsprung vorzusehen, der die Verriegelungsfläche aufweist. In dem Werkzeugkopf ist dann eine den Vorsprung aufnehmende Ausnehmung vorgesehen, in deren Wandung die Vertiefung für das Verriegelungselement eingebracht ist. Die Schnappverriegelung ist somit einfach und robust aufgebaut und daher sehr störungsunanfällig.

Besonders bevorzugt wird eine Ausführungsform des Zerspanungswerkzeugs, bei dem in die Wandung der den Vorsprung der Verriegelungseinrichtung aufnehmenden Ausnehmung eine Ringnut eingebracht ist, die ein als Federring ausgebildetes Federelement aufnimmt. Der Federring wird in der Ringnut sicher gehalten und übt auf die Verriegelungsfläche des Vorsprungs eine Verriegelungskraft aus, so daß der Vorsprung in die Ausnehmung hereingezogen und somit die Messerplatte fest verankert wird. Diese Art der Schnappverriegelung zeichnet sich durch einen besonders einfachen und damit preiswert realisierbaren Aufbau aus, wobei gleichzeitig ein sicherer Halt der Messerplatte am Werkzeugkopf gewährleistet ist.

Besonders bevorzugt wird ein Zerspanungswerkzeug, bei dem der Vorsprung der Schnappverriegelung von der dem Werkzeugkopf zugewandten Oberfläche der Messerplatte entspringt und in eine Ausnehmung eingreift, die in den Grundkörper des Werkzeugkopfs eingebracht ist. Die Messerplatte dieses Zerspanungswerkzeugs ist sehr stabil, da hier irgendwelche Ausnehmungen in dem Grundkörper der Messerplatte entfallen. Die Messerplatte wird vielmehr durch den auf der Unterseite entspringenden Vorsprung stabilisiert und zeichnet sich durch eine ausgezeichnete Festigkeit aus. Dies ist besonders bei kleinen Durchmessern der Messerplatte äußerst vorteilhaft.

Weiterhin wird eine Ausführungsform des Zerspanungswerkzeugs bevorzugt, bei der die Befestigungsvorrichtung so ausgebildet ist, daß die Messerplatte in eine vorgebbare Richtung abdrängbar ist. Die bei der Verspannung der Messerplatte entstehenden Spannkräfte wirken also nicht nur so, daß die Messerplatte am Grundkörper des Werkzeugkopfs gehalten sondern zusätzlich in eine vorgebbare Richtung abgedrängt wird. Dadurch liegt die Messerplatte besonders gut an Anlageflächen an und erhält eine durch die Anordnung und Ausbildung der Anlageflächen vorgebbare Orientierung.

Weiterhin wird eine Ausführungsform des Zerspanungswerkzeugs bevorzugt, bei der eine Einstellvorrichtung vorgesehen ist. Auch bei der hier gewählten sehr einfachen Befestigung der Messerplatte ist eine Lageeinstellung möglich, so daß auf die Maße der bearbeiteten Oberflächen des Werkstücks Einfluß genommen werden kann. Insbesondere bei der Ausbildung des Zerspanungswerkzeugs als Reibahle kann ein Verschleiß der Messerplatte in einem gewissen Rahmen ausgeglichen werden. Auch ist die exakte Einstellung des gewünschten Oberflächenmaßes, insbesondere des erzielten Bohrungsdurchmessers einstellbar.

Weitere Ausgestaltungen des Zerspanungswerkszeugs ergeben sich aus den übrigen Unteransprüchen.

Die Erfindung wird im folgenden anhand der Zeichnung näher erläutert. Es zeigen:
- Figur 1: einen Teilschnitt durch den Werkzeugkopf eines Zerspanungswerkzeugs;
- Figur 2: eine Teilansicht des Werkzeugkopfs eines ersten Ausführungsbeispiels eines Zerspanungswerkzeugs;
- Figur 3: eine Teilansicht des Werkzeugkopfs eineszweiten Ausführungsbeispiels des Zerspanungswerkzeugs und
- Figur 4: eine Teilansicht des Werkzeugkopfs eines weiteren Ausführungsbeispiels des Zerspanungswerkzeugs.

Im folgenden wird lediglich beispielhaft davon ausgegangen, daß es sich bei dem anhand der Figuren erläuterten Zerspanungswerkzeug um eine Reibahle handelt. Es ist jedoch festzuhalten, daß die Erfindung allgemein Werkzeuge -zum Beispiel auch Bohrer, Fräser und Drehwerkzeuge- betrifft, die mit einer der Spanbearbeitung dienenden Messerplatte ausgerüstet sind, die mittels einer Befestigungseinrichtung am Werkzeugkopf gehalten wird.

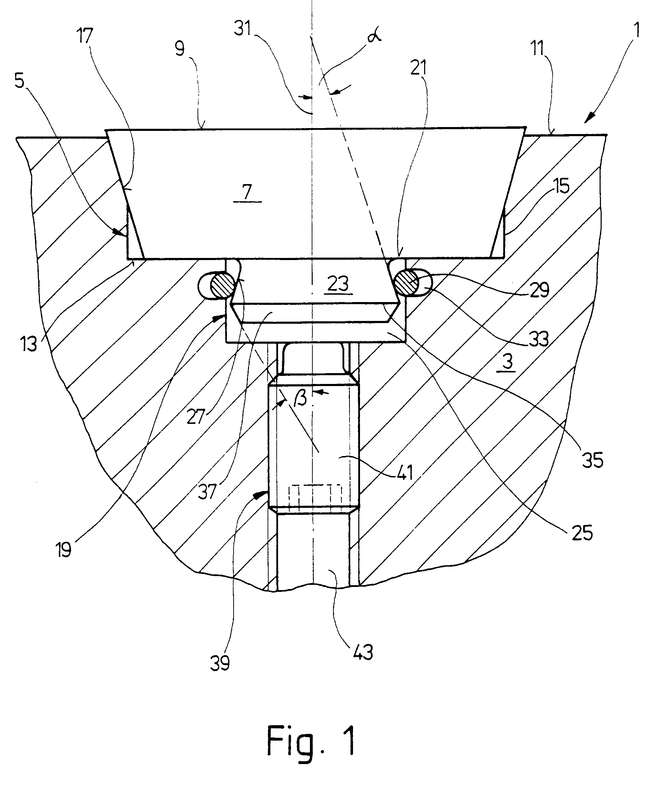

Figur 1 zeigt also eine Teilansicht einer Reibahle 1, bei der der Grundkörper 3 des Werkzeugkopfs der Reibahle im Schnitt dargestellt ist. In den Grundkörper ist eine Vertiefung 5 eingebracht, deren äußere Kontur vorzugsweise an die Form einer Messerplatte 7 angepaßt ist. Die Tiefe der Vertiefung 5 ist so gewählt, daß die Messerplatte nur wenig aus der Vertiefung herausragt, so daß die dem Grundkörper 3 abgewandte Oberfläche 9 der Messerplatte, beziehungsweise die Messerbrust, praktisch fluchtend in die Oberfläche 11 des Grundkörpers 3 übergeht. Der Grund 13 der Vertiefung 5 kann als Widerlager für die Messerplatte 7 dienen. Bei dem hier dargestellten Ausführungsbeispiel ist der Grund 13 eben ausgebildet, so daß die Messerplatte 7 flächig aufliegt. Die seitlichen Begrenzungswände 15 der Vertiefung 5 verlaufen zumindest bereichsweise konisch, das heißt, sie sind gegenüber der Vertikalen unter einem Winkel geneigt, der sich in Richtung zur Oberfläche 11 des Grundkörpers 3 öffnet. Die Neigung der geneigten Seitenflächen ist identisch gewählt, wie die Neigung der seitlichen Begrenzungsflächen 17 der Messerplatte 7. Das heißt also, die Messerplatte 7 findet an den geneigten Seitenflächen 15 sicheren Halt. Sie wird in ihrer Lage durch die parallel zueinander verlaufenden Seitenflächen beziehungsweise Begrenzungsflächen lagefixiert.

Das als Reibahle 1 ausgebildete Zerspanungswerkzeug weist eine Befestigungseinrichtung 19 auf, mit deren Hilfe die Messerplatte 7 fest im Grundkörper 3 der Reibahle 1 verankert wird. Die Befestigungseinrichtung umfaßt einen von der dem Grund 13 zugewandten Unterseite 21 der Messerplatte 7 entspringenden Vorsprung 23, der in eine Ausnehmung 25 im Grundkörper 3 der Reibahle 1 ragt. Der Vorsprung weist mindestens eine Verriegelungsfläche 27 auf, die mit Verriegelungselementen 29 zusammenwirkt.

Die Form des Vorsprungs 23 ist an die Kontur der Ausnehmung 25 angepaßt. Hier weist die Messerplatte 7 einen im wesentlichen zylindrisch ausgebildeten Vorsprung auf, der in eine kreisförmige Ausnehmung 25 ragt. Die Tiefe der Ausnehmung ist so gewählt, daß der Vorsprung 23 den Boden der Ausnehmung im montierten Zustand der Messerplatte 7 nicht erreicht.

Die Verriegelungsfläche 27 kann mehrere Einzelflächen aufweisen. Sie ist hier als durchgehende, das heißt, umlaufende Fläche ausgebildet, die als Kegelabschnitt-Mantel ausgeformt ist. Die Verriegelungsfläche 27 schließt mit einer hier gestrichelt angedeuteten Mittelachse 31 des Vorsprungs 23 einen Winkel α ein, der im Bereich von etwa 0° bis 25°, vorzugsweise im Bereich von etwa 10° bis 20° liegen kann und insbesondere etwa 15° beträgt.

Das Verriegelungselement 29 ist federelastisch ausgebildet und wird vorzugsweise durch einen Federring realisiert, der unter einer derartigen Vorspannung steht, daß er -sofern der Vorsprung 23 nicht in der Ausnehmung 25 angeordnet ist- einen Innendurchmesser aufweist, der kleiner ist als der im Anlagebereich des Verriegelungselements 29 an der Verriegelungsfläche 27 gegebene Außendurchmesser des Vorsprungs 23. Das Verriegelungselement 29 kann auch durch einen einer speziellen Kontur folgenden Federring realisiert werden, der im wesentlich einer Kreisbahn folgt, jedoch etwa schlangenlinienförmig ausgebildet ist. Das heißt also, im montierten Zustand der Messerplatte 7 übt das als Federring ausgebildete Verriegelungselement 29 eine im wesentlichen senkrecht zur Mittelachse 31 wirkende Kraft auf die Verriegelungsfläche 27 aus. Aufgrund der Neigung der Verriegelungsfläche spaltet sich die Kraft des Verriegelungselements 29 unter anderem in eine in Richtung der Mittelachse 31 wirkende Kraftkomponente auf, die die Messerplatte 7 in die Vertiefung 5 hineinzieht. Die durch das Zusammenspiel von Verriegelungsfläche und Verriegelungselement bewirkte Spannkraft wirkt also in Figur 1 von oben nach unten, so daß die Messerplatte 7 in den Grundkörper 3 der Reibahle 1 hineingezogen und sicher verspannt wird.

Das Verriegelungselement 29 ist im Inneren der Ausnehmung 25 untergebracht, hier in einer in die Innenwand der Ausnehmung eingebrachten umlaufenden Ringnut 33. Das Verriegelungselement stützt sich beim Verspannen der Messerplatte 7 an der oberen Begrenzungswand der Ringnut ab, deren Breite so gewählt ist, daß sich das Verriegelungselement 29 in deren Inneren möglichst reibungsarm bewegen kann. Die Tiefe der Ringnut 33 ist so gewählt, daß das Verriegelungselement 29 in das Innere der Ringnut hineinverlagert werden kann, so daß der Vorsprung 23 gegen die elastische Federkraft des Verriegelungselements 29 in das Innere der Ausnehmung 25 hineingedrückt werden kann.

Die Verriegelungsfläche 27 wird auf ihrer der Unterseite 21 abgewandten Seite von einer Ringschulter 35 begrenzt, die dadurch gebildet wird, daß sich an die Verriegelungsfläche 27 eine Anlaufschräge 37 anschließt, die einzelne Facetten aufweisen kann, die in den Berührungsbereichen mit dem Verriegelungselement 29 vorgesehen sind. Hier ist die Anlaufschräge aus Gründen der einfachen Herstellbarkeit als umlaufende Ringfläche ausgebildet, die dem Mantel eines Kegelabschnitts entspricht. Die Anlaufschräge 37 schließt mit der Mittelachse 31 einen Winkel β ein, der im Bereich von etwa 10° bis 60°, vorzugsweise von etwa 20° bis 45° liegt und insbesondere etwa 35° beträgt. Der Winkel ist so gewählt, daß das Verriegelungselement 29 beim Einführen des Vorsprungs 23 in die Ausnehmung 25 leicht in die Ringnut 33 gedrängt werden kann.

Der Abstand der Ringschulter 35 zur Unterseite 21 der Messerplatte 7 ist so gewählt, daß sie im eingesetzten Zustand der Messerplatte unterhalb des Wirkungsbereichs des Verriegelungselements 29 liegt. Das heißt, das Verriegelungselement wirkt auf die zwischen der Ringschulter 35 und der Unterseite 21 der Messerplatte 7 liegende Verriegelungsfläche 27.

Figur 1 zeigt, daß der Außendurchmesser des Vorsprungs 23 kleiner gewählt ist als der Innendurchmesser der Ausnehmung 25, so daß eine gewisse Verlagerung des Vorsprungs 23 innerhalb der Ausnehmung 29 möglich ist. Darauf wird unten noch näher eingegangen.

Die Reibahle 1 ist mit einer Auswurfeinrichtung 39 versehen, die eine entgegen der Spannkraft der Befestigungseinrichtung 19 wirkende Auswurfkraft auf die Messerplatte 7 ausüben kann. Hier ist die Auswurfeinrichtung 39 durch eine Schraube 41 realisiert, die mit einem Außengewinde versehen ist, das mit einem Innengewinde einer Bohrung 43 kämmt. Die Bohrung 43 ist so gelegt, daß die Schraube auf die Stirnfläche des Vorsprungs 43 wirken kann. Es ist auch denkbar, daß die Auswurfeinrichtung 39 auf eine beliebige Stelle der Unterseite 21 der Messerplatte 7 wirkt. Der Vorsprung 23 bildet jedoch einen besonders stabilen Bereich der Messerplatte 7, so daß hier ohne die Gefahr einer Beschädigung der Platte Auswurfkräfte aufgebracht werden können.

In Figur 1 ist die Schraube 41 in ihrer zurückgezogenen Stellung dargestellt. Sie kann so bewegt werden, daß sie sich in Richtung der Mittelachse 31 nach oben bewegt und so gegen die Unterseite des Vorsprungs 23 stößt, dabei eine Auswurfkraft auf die Messerplatte 7 ausübt. Die Bohrung 43 durchdringt den Grundkörper 3 der Reibahle 1 so, daß die Schraube problemlos erreichbar ist.

Aus der Funktion des als Federring ausgebildeten Verriegelungselements 29 ist ersichtlich, daß anstelle einer umlaufenden Ringnut 33 auch eine, vorzugsweise mehrere unter einem Winkel zur Mittelachse 31 verlaufende Bohrungen den Grundkörper 3 der Reibahle 1 durchdringen können, die in der Ausnehmung 25 münden; sie verlaufen vorzugsweise senkrecht zur Mittelachse 31. In diese Bohrungen können Verriegelungselemente eingebracht werden, die beispielsweise als Kugeln ausgebildet sind, die mittels einer Schraubenfeder gegen die Verriegelungsfläche 27 des Vorsprungs 23 gepreßt werden. Auch können in derartige Bohrungen mit einer Vorspannkraft beaufschlagte Stifte, insbesondere Federstifte eingesetzt werden, die eine Spannkraft auf die Verriegelungsfläche 27 ausüben, die in Richtung auf die Mittelachse 31 wirkt.

Die auf diese Weise ausgeübte Spannkraft wird, ebenso wie die in Richtung auf die Mittelachse 31 wirkende Spannkraft des Federrings 29, so aufgespalten, daß eine in Richtung der Mittelachse 31 wirkende Spannkraft entsteht, die die Messerplatte 7 in das Innere der Vertiefung 5 hineinzieht und so sicher am Grundkörper 3 beziehungsweise Werkzeugkopf der Reibahle 1 befestigt.

Aus dem oben Gesagten wird deutlich, daß die Verriegelungskräfte nicht unbedingt gleichmäßig aus allen Richtungen auf die Verriegelungsfläche 27 wirken müssen. Es kann beispielsweise vorgesehen sein, daß der Federring einseitig offen ist oder auch einzelne Ringsegmente aufweist, die sich einerseits am Grund der Ringnut 33 abstützen und andererseits eine Spannkraft in Richtung auf die Mittelachse 31 auf die Verriegelungsfläche 27 ausüben. Es ist auch denkbar, daß bei der Verwendung von federbelasteten Kugeln oder Stiften, die in Bohrungen untergebracht sind, die in der Ausnehmung 25 münden, Federn mit verschiedener Vorspannkraft eingesetzt werden, so daß der Vorsprung 23 von der Mittelachse 31 abgedrängt wird.

Eine ungleichmäßige Belastung der Messerplatte 7 mit Einspannkräften, die zu einer Verlagerung der Platte in eine vorgebbare Richtung führt, kann beispielsweise dadurch realisiert werden, daß das als Federring ausgebildete Verriegelungselement 29 bereichsweise mit einem nachgiebigen Material hinterfüttert wird, das in der Ringnut 33 untergebracht wird. Denkbar ist auch, daß der Grund 13 der Vertiefung 5, ebenso wie die Unterseite 21 der Messerplatte 7 nicht senkrecht zur Mittelachse 31, sondern unter einem Winkel dazu angeordnet sind, so daß bei der Beaufschlagung der Messerplatte 7 mit einer in Richtung der Mittelachse verlaufenden Einspannkraft die Messerplatte auf der von dem Grund 13 beziehungsweise der Unterseite 21 gebildeten Schrägfläche entlanggleitet und so in eine vorgebbare Richtung abgedrängt wird.

Bei einer derartigen Ausgestaltung der Befestigungseinrichtung 19 muß die Kontur der Vertiefung 5 so gewählt werden, daß eine Bewegung der Messerplatte 7 aufgrund derartig ungleichmäßiger Spannkräfte möglich ist. Durch derartige, in bevorzugte Richtungen wirkende Spannkräfte kann sichergestellt werden, daß sich die Messerplatte 7 mit ihren Begrenzungsflächen 17 an vorgegebene Seitenflächen 15 der Vertiefung 5 anlegt. Um eine derartige Verlagerung der Messerplatte 7 zu ermöglichen, ist, wie gesagt, der Außendurchmesser des Vorsprungs 23 kleiner gewählt als der Innendurchmesser der Ausnehmung 25.

Aus der Wirkungsweise der Befestigungseinrichtung 19, das heißt, aus dem Zusammenspiel der Verriegelungsfläche 27 am Vorsprung 23 mit dem Verriegelungselement 29 in der Ausnehmung 25 ergibt sich, daß auch eine Funktionsumkehr denkbar ist: die Messerplatte 7 kann mit einer Ausnehmung versehen sein, in die ein vom Grundkörper 3 der Reibahle 1 entspringender Vorsprung eingreift. Es ist allerdings festzuhalten, daß die Messerplatte durch die Ausnehmung, die der Aufnahme des Vorsprungs dient, geschwächt wird, selbst wenn die Ausnehmung nicht als Durchgangsloch in der Messerplatte ausgebildet ist, sondern als Sackloch. Insbesondere bei dicken Messerplatten ist jedoch auch diese Ausgestaltung der Befestigungseinrichtung ohne weiteres möglich.

Jedoch bei kleinen Dimensionen der Messerplatte 7 wird eindeutig erkennbar, daß diese durch den Vorsprung 23 eher stabilisiert wird, da hier eine Materialverstärkung gegeben ist. Die in Figur 1 dargestellte Ausgestaltung der Befestigungseinrichtung ist daher insbesondere für kleine Abmessungen der Messerplatte unbedingt vorzuziehen.

Es zeigt sich jedoch auch noch folgendes: Das Verriegelungselement 29 kann unmittelbar auf die seitlichen Begrenzungsflächen der Messerplatte wirken, sofern diese zumindest bereichsweise Verriegelungsflächen aufweisen, die einen Neigungswinkel α aufweisen, der sich in Richtung auf die Unterseite 21 der Messerplatte 7 öffnet. Das Verriegelungselement 29 müßte dann in einer geeigneten Ringnut untergebracht werden, die in der Seitenfläche 15 der Vertiefung 5 eingebracht ist. Bei einer derartigen Ausgestaltung kann die in den Grundkörper 3 der Reibahle 1 eingebrachte Ausnehmung 25 entfallen, was insbesondere bei sehr kleinen Durchmessern der Reibahle vorteilhaft sein kann, weil dann eine Schwächung des Werkzeugkopfs reduziert wird.

Aus der Darstellung gemäß Figur 1 ergibt sich insgesamt, daß die Messerplatte 7 zur Befestigung im Grundkörper 3 der Reibahle 1 lediglich in die Vertiefung 5 eingedrückt wird, wobei der Vorsprung 23 in die Ausnehmung 25 eingeführt wird. Durch eine auf die Oberfläche 9 der Messerplatte 7 ausgeübte Druckkraft wird das Verriegelungselement 29 von der Anlaufschräge 37 in eine Entriegelungsstellung verlagert, das heißt, bei dem in Figur 1 dargestellten Ausführungsbeispiel in die Ringnut 33 hineingedrückt. Nach Überschreiten der Ringschulter 35, die den größten Außendurchmesser des Vorsprungs 23 darstellt, kann das Verriegelungselement 29 aufgrund der ihm eigenen Vorspannungskraft in Richtung auf die Mittelachse 31 verlagert werden und auf die Verriegelungsfläche 27 einwirken. Dabei wird eine Spannkraft auf den Vorsprung 23 ausgeübt, die zumindest eine Komponente aufweist, die in Richtung der Mittelachse 31 verläuft und so wirkt, daß die Messerplatte 7 in das Innere der Vertiefung 5 hingezogen wird, bis sie schließlich am Grund 13 der Vertiefung 5 anliegt, oder bis die Begrenzungsflächen 27 der Messerplatte 7 so an den Seitenflächen 15 der Vertiefung 5 anliegen, daß eine weitere Verlagerung der Messerplatte in das Innere der Vertiefung nicht mehr möglich ist. Die Messerplatte wird also ausschließlich durch die auf die Verriegelungsfläche 27 wirkenden Spannkräfte gehalten. Es bedarf keiner weiteren Befestigungselemente mehr. Insbesondere können die Messerplatte durchdringende Befestigungsschrauben entfallen, die die Platte wesentlich schwächen. Auch bedarf es keiner Spannpratzen mehr, die auf die Oberfläche 9 der Messerplatte wirken und damit den von der Oberfläche der Messerplatte und von der Oberfläche 11 des Grundkörpers 3 begrenzten Spanraum einengen.

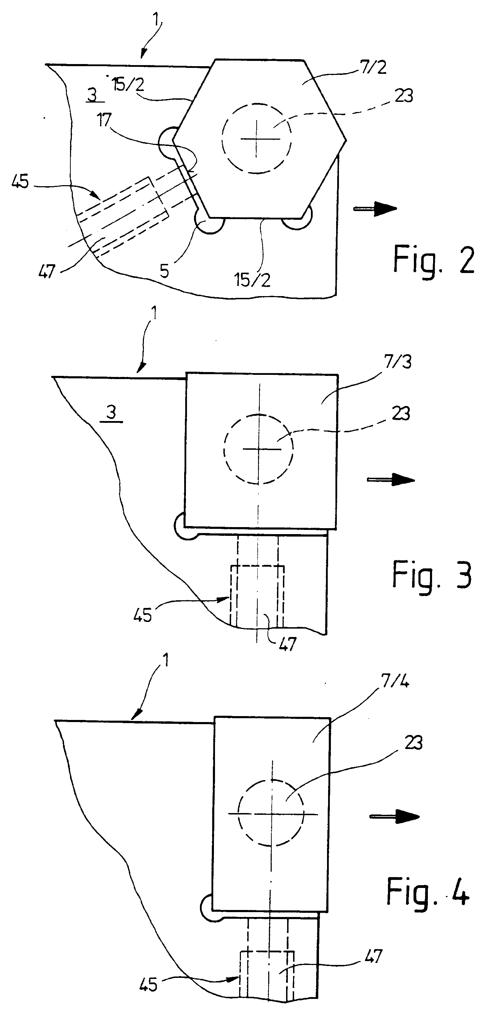

Die Wirkungweise der Befestigungseinrichtung 19 entspricht quasi einem Druckknopf. Das heißt, nach Überschreiten der Ringschulter 25 schnappt das Verriegelungselement 29 ein und hält die Messerplatte 7 fest. Diese ist sehr leicht zu entfernen, indem nämlich die Auswurfeinrichtung 39 betätigt und die Schraube 41 in Richtung auf die Stirnseite des Vorsprungs 23 eingeschraubt wird und diesen aus der Ausnehmung 25 herausdrückt. Sobald wiederum die Ringschulter 35 das Verriegelungselement 29 überschritten hat, wirken die Verriegelungselemente auf die Anlaufschräge 37 und drücken die Messerplatte 7 aus der Vertiefung 5 heraus. Die Platte kann daher leicht entfernt werden. Die Befestigungseinrichtung wirkt nach allem wie eine Schnappverriegelung, die für eine sichere Verankerung der Messerplatte in dem Grundkörper der Reibahle sorgt. Die Figuren 2, 3 und 4 zeigen Ansichten eines Zerspanungswerkzeugs, das hier wiederum beispielhaft als Reibahle 1 ausgebildet ist. Teile, die anhand von Figur 1 bereits erläutert wurden, wurden mit gleichen Bezugsziffern versehen, so daß auf das oben Gesagte verwiesen werden kann.

In den Figuren 2 bis 4 wird eine Messerplatte in Draufsicht dargestellt. Gemäß Figur 2 kann die Messerplatte 7/2 als Sechseck ausgebildet sein, die in einer entsprechend ausgebildeten Vertiefung 5 untergebracht ist. Die Seitenwände der Vertiefung brauchen die Messerplatte nicht vollständig zu umschließen. Der Vorsprung 23 ist hier nur beispielhaft in der Mitte der Messerplatte 7/2 angeordnet. Die von dem hier nicht ersichtlichen Verriegelungselement aufgebauten Spannkräfte wirken vorzugsweise so, daß die Messerplatte 7/2 gegen vorgegebene Seitenflächen 15/2 der Vertiefung 5 gedrängt wird. Auf diese Weise ist es möglich, eine Einstellvorrichtung 45 vorzusehen, die eine entgegen der Abdrängkraft wirkende Einstellkraft aufbaut. Die Einstellvorrichtung 45 kann beispielsweise durch eine Einstellschraube 47 realisiert werden, die mit ihrer Stirnseite beziehungsweise über einen Stellkeil auf die seitliche Begrenzungsfläche 17 der Messerplatte 7/2 wirkt, also entgegen der Abdrängkraft.

Die in Figur 3 wiedergegebene Messerplatte 7/3 ist quadratisch ausgebildet. Sie weist wiederum einen Vorsprung 23 auf, der sich in die Bildebene erstreckt und Teil einer Befestigungseinrichtung ist, mit deren Hilfe die Messerplatte 7/3 am Grundkörper 3 der Reibahle 1 befestigbar ist. Auch hier ist die anhand von Figur 1 erläuterte Schnappverriegelung vorgesehen. Die Spannkräfte können hier so aufgebaut werden, daß die Messerplatte 7/3 -gemäß Figur 3- senkrecht nach unten, das heißt, senkrecht zur Mittelachse 31, abgedrängt wird und damit an einer Einstellvorrichtung 45 anliegt, die wiederum eine Einstellschraube 27 aufweisen kann. Diese dient der Verlagerung der Messerplatte 7/3, um beispielsweise den Durchmesser der mit der Reibahle bearbeiteten Bohrung einzustellen.

Aus Figur 4 ist schließlich eine Messerplatte 7/4 ersichtlich, die -in Draufsicht gesehen- rechteckförmig ausgebildet ist, wobei die Schmalseite nach oben und die Längsseite nach links ausgerichtet ist. Auch hier ist -gestrichelt angedeutet- ein Vorsprung 23 vorgesehen, der in die Bildebene hineinragt und Teil einer Befestigungseinrichtung ist, die so ausgebildet sein kann, daß eine Abdrängkraft auf die Messerplatte 7/4 ausgeübt wird, so daß diese gegen eine Einstellvorrichtung 45 mit einer Einstellschraube 7 gedrängt wird.

Bei allen Darstellungen gemäß Figur 2, 3 und 4 ist davon auszugehen, daß das als Reibahle 1 ausgebildete Zerspanungswerkzeug während der Bearbeitung einer Bohrung von links nach rechts in Richtung des Doppelpfeils vorgeschoben wird, während das Werkzeug eine -in Vorschubrichtung gesehen- Drehung im Uhrzeigersinn ausführt. Selbstverständlich ist es auch möglich, daß die Reibahle feststehend und das bearbeitete Werkstück rotierend angetrieben ist. Die Messerplatte überragt die seitliche und vordere Außenfläche des Zerspanungswerkzeugs, um mit dem Werkstück in Eingriff treten zu können.

Aus den Figuren 2 bis 4 wird deutlich, daß die anhand von Figur 1 erläuterte Befestigungseinrichtung universell, das heißt, unabhängig von der Form der Messerplatte, einsetzbar ist. In allen Fällen wird eine sichere und einfach herstellbare Verankerung der Messerplatte im Grundkörper beziehungsweise am Werkzeugkopf der Reibahle gewährleistet, wobei die Befestigung mittels einer einfachen Schnappverriegelung durchgeführt wird. Dabei ist es lediglich erforderlich, die Messerplatte beziehungsweise deren Vorsprung in eine Ausnehmung einzupressen, die im Grundkörper der Reibahle vorgesehen ist. Sobald der Vorsprung über eine gewisse Tiefe in die Ausnehmung eingedrückt ist, rastet die Schnappverriegelung ein und hält die Messerplatte sicher fest. Die Schnappverriegelung wird aktiviert, sobald der größte Durchmesser des Vorsprungs, also die Ringschulter 35, den Bereich der Verriegelungselemente 29 überschritten hat, so daß letztere mit der Verriegelungsfläche 27 am Vorsprung 23 in Eingriff treten können, so daß die Spannkräfte aufgebaut werden. Durch die bei der Bearbeitung eines Werkstückes auf die Messerplatte wirkenden Kräfte wird diese gegen den Grund der Vertiefung gepreßt, so daß die Spannkräfte der Schnappverriegelung sicher ausreichen, die Messerplatte im Werkzeug zu verankern.

## Patentansprüche

1. Zerspanungswerkzeug, insbesondere Reibahle, mit einer am Werkzeugkopf mittels einer als Schnappverriegelung ausgebildeten Befestigungseinrichtung gehaltenen Messerplatte, **dadurch gekennzeichnet**, daß die Messerplatte (7) mindestens eine Verriegelungsfläche (27) aufweist und in einer Seitenflache (15) einer die Messerplatte (7) zumindest teilweise aufnehmenden Vertiefung (5) eine Vertiefung (33) eingebracht ist, in der ein gegen eine nachgiebige Kraft verlagerbares, die Verriegelungsfläche (27) mit einer Verriegelungskraft beaufschlagendes Verriegelungselement (29) untergebracht ist.

2. Zerspanungseinrichtung nach Anspruch 1, **dadurch gekennzeichnet**, daß die Messerplatte (7) einen Vorsprung (23) umfaßt, daß die Verriegelungsfläche (27) an dem Vorsprung (23) vorgesehen ist, und daß eine den Vorsprung aufnehmende Ausnehmung (25) vorgesehen ist, in deren Wandung die Vertiefung eingebracht ist.

3. Zerspanungseinrichtung nach einem der vorhergehenden Ansprüche, **dadurch gekennzeichnet**, daß die Vertiefung als Ringnut (33) oder als Bohrung ausgebildet ist, deren Mittelachse unter einem Winkel zur Mittelachse (31) der Ausnehmung (25) angeordnet ist.

4. Zerspanungswerkzeug nach Anspruch 3, **dadurch gekennzeichnet**, daß in die Ringnut (33) mindestens ein Federelement eingesetzt ist, das vorzugsweise als Federring ausgebildet ist.

5. Zerspanungswerkzeug nach Anspruch 3, **dadurch gekennzeichnet**, daß in die Bohrung ein Federelement eingesetzt ist, das vorzugsweise eine gegen die Kraft einer Feder verlagerbare Kugel umfaßt oder als Federstift ausgebildet ist.

6. Zerspanungswerkzeug nach einem der Ansprüche 1 bis 5, **dadurch gekennzeichnet**, daß die Verriegelungsfläche (27) unter einem Winkel α von etwa 0° bis 25°, insbesondere von etwa 10° bis 20° vorzugsweise von etwa 15° geneigt ist, wobei der Winkel sich in Richtung der Einschubrichtung des Vorsprungs öffnet.

7. Zerspanungswerkzeug nach einem der Ansprüche 1 bis 6, **dadurch gekennzeichnet**, daß der Vorsprung (23) im Bereich seiner Stirnfläche mit einer Anlaufschrage (37) versehen ist, die beim Einführen des Vorsprungs (23) in die Ausnehmung (25) mit dem Verriegelungselement (29) in Eingriff tritt und dieses in eine Entriegelungsstellung drängt, und daß die Anlaufschräge unter einem Winkel β von etwa 10° bis 60°, insbesondere von etwa 20° bis 45° und vorzugsweise von etwa 35° so geneigt ist, daß sich der Winkel entgegengesetzt zur Einschubrichtung des Vorsprungs öffnet.

8. Zerspanungswerkzeug nach einem der Ansprüche 1 bis 7, **dadurch gekennzeichnet**, daß der Vorsprung (23) im wesentlichen kreiszylindrisch und die Ausnehmung (25) im wesentlichen kreisförmig ausgebildet sind.

9. Zerspanungswerkzeug nach einem der Ansprüche 1 bis 8, **dadurch gekennzeichnet**, daß der Vorsprung (23) von der dem Werkzeugkopf zugewandten Unterseite (21) der Messerplatte (7; 7/2; 7/3; 7/4) entspringt.

10. Zerspanungswerkzeug nach einem der Ansprüche 1 bis 9, **dadurch gekennzeichnet**, daß die Ausnehmung (25) in dem Grundkörper (3) des Werkzeugkopfs eingebracht ist.

11. Zerspanungswerkzeug nach einem der vorhergehenden Ansprüche, **dadurch gekennzeichnet**, daß die Befestigungsvorrichtung (19) so ausgebildet ist, daß die Messerplatte (7; 7/2; 7/3; 7/4) in eine vorgebbare Richtung abdrängbar ist.

12. Zerspanungswerkzeug nach Anspruch 11, **dadurch gekennzeichnet**, daß die Richtung der Spannkraft des auf die Verriegelungsfläche (27) wirkenden Verriegelungselements (29) so vorbestimmbar ist, daß die Messerplatte (7) in eine vorgebbare Richtung abdrängbar ist.

13. Zerspanungswerkzeug nach einem der Ansprüche 1 bis 12, **gekennzeichnet durch** eine Einstellvorrichtung (45).

14. Zerspanungswerkzeug nach Anspruch 13, **dadurch gekennzeichnet**, daß die Einstellvorrichtung (45) so ausgebildet ist, daß die Messerplatte (7; 7/2; 7/3; 7/4) gegen die von der Befestigungsvorrichtung (19) vorgebbare Abdrängkraft verlagerbar ist.

15. Zerspanungswerkzeug nach einem der vorhergehenden Ansprüche, **gekennzeichnet durch** eine der Befestigungseinrichtung (19) entgegenwirkende Auswurfeinrichtung (39).

## Claims

1. A cutting tool, in particular a reamer, having a knife plate held on the tool head by means of a securing arrangement in the form of a snap-action locking means, characterised in that the knife plate (7) has at least one locking surface (27), and a cavity (33) is made in a lateral face (15) of a cavity (5) receiving at least part of the knife plate (7) and houses a locking element (29) which is movable against a yielding force and which acts upon the locking surface (27) with a locking force.

2. A cutting instrument in accordance with Claim 1, characterised in that the knife plate (7) comprises a projection (23), in that the locking surface (27) is provided on the projection (23), and in that a recess (25) is provided which receives the projection and in the wall of which the cavity is made.

3. A cutting instrument in accordance with any one of the preceding Claims, characterised in that the cavity is in the form of an annular groove (33) or a bore, the centre line thereof being arranged at an angle to the centre line (31) of the recess (25).

4. A cutting tool in accordance with Claim 3, characterised in that at least one spring element is inserted into the annular groove (33) and is preferably in the form of a spring ring.

5. A cutting tool in accordance with Claim 3, characterised in that a spring element is inserted into the bore, the spring element preferably comprising a ball movable against the force of a spring or being in the form of a spring pin.

6. A cutting tool in accordance with any one of Claims 1 to 5 characterised in that the locking surface (27) is inclined at an angle α of approximately 0° to 25 °, in particular approximately 10° to 20 °, preferably approximately 15 °, the angle opening in the direction of the insertion direction of the projection.

7. A cutting tool in accordance with any one of Claims 1 to 6, characterised in that the projection (23) is provided with a leading slope (37) in the region of its end surface, this leading slope (37) contacting the locking element (29) upon insertion of the projection (23) into the recess (25) and urging the locking element (29) into an unlocking position, and in that the leading slope is inclined at an angle β of approximately 10° to 60°, in particular approximately 20° to 45 ° and preferably approximately 35°, in such a manner that the angle opens in an opposite direction to the insertion direction of the projection.

8. A cutting tool in accordance with any one of Claims 1 to 7, characterised in that the projection (23) is substantially circular-cylindrical and the recess (25) is substantially circular.

9. A cutting tool in accordance with any one of Claims 1 to 8, characterised in that the projection (23) issues from the underside (21) of the knife plate (7; 7/2; 7/3; 7/4), the underside facing the tool head.

10. A cutting tool in accordance with any one of Claims 1 to 9, characterised in that the recess (25) is made in the main body (3) of the tool head.

11. A cutting tool in accordance with any one of the preceding Claims, characterised in that the securing arrangement (19) is such that the knife plate (7; 7/2; 7/3; 7/4) can be pushed aside in a preselectable direction.

12. A cutting tool in accordance with Claim 11, characterised in that the direction of the clamping force of the locking element (29) acting upon the locking surface (27) can be predetermined in such a manner that the knife plate (7) can be pushed aside in a preselectable direction.

13. A cutting tool in accordance with any one of Claims 1 to 12, characterised by an adjusting device (45).

14. A cutting tool in accordance with Claim 13, characterised in that the adjusting device (45) is such that the knife plate (7; 7/2; 7/3; 7/4) is movable against the pushing-aside force preselectable by the securing arrangement (19).

15. A cutting tool in accordance with any one of the preceding Claims, characterised by an ejecting device (39) counteracting the securing arrangement (19).

## Revendications

1. Outil de coupe, en particulier alésoir, avec une lame de coupe fixée à la tête de l'outil au moyen d'un dispositif de fixation conçu sous forme d'un système de blocage par encliquetage, caractérisé en ce que la lame de coupe (7) présente au moins une surface de blocage (27) et en ce qu'il est aménagé dans un côté latéral (15) d'une cavité (5) servant a loger au moins pour partie la lame de coupe (7), une encoche (33), dans laquelle est inséré un élément de blocage (29) pouvant être déplacé contre une force élastique et agissant sur la surface de blocage (27) avec une force de blocage.

2. Outil de coupe selon la revendication 1, caractérisé en ce que la lame de coupe (7) comporte un élément faisant saillie (23), en ce que la surface de blocage (27) est prévue sur l'élément faisant saillie (23), et en ce qu'un creux (25) logeant l'élément faisant saillie est prévu, dans la paroi duquel est aménagée l'encoche.

3. Outil de coupe selon l'une des revendications précédentes, caractérisé en ce que l'encoche est conçue sous forme d'une rainure circulaire (33) ou d'un alésage, dont l'axe médian est placé selon un certain angle par rapport à l'axe médian (31) du creux (25).

4. Outil de coupe selon la revendication 3, caractérisé en ce qu'au moins un élément de ressort est inséré dans la rainure circulaire (33), qui, de préférence est conçu sous forme d'une rondelleressort.

5. Outil de coupe selon la revendication 3, caractérisé en ce qu'un élément de ressort est inséré dans l'alésage, qui, de préférence, comprend une bille pouvant être déplacée contre la force d'un ressort ou qui est conçu sous forme d'une tige à ressort.

6. Outil de coupe selon l'une des revendications 1 à 5, caractérisé en ce que la surface de blocage (27) est inclinée selon un angle d d'environ 0 ° à 25 °, en particulier d'environ 10 ° à 20 °, de préférence d'environ 15 °, l'angle s'ouvrant dans le sens de la direction d'insertion de l'élément faisant saillie.

7. Outil de coupe selon l'une des revendications 1 à 6, caractérisé en ce que l'élément faisant saillie (23) est pourvu, dans la zone de sa face avant, d'un chanfrein d'introduction (37), qui, lors de l'insertion de l'élément faisant saillie (23) dans le creux (25), vient en contact avec l'élément de blocage (29) et pousse celui-ci en position de déblocage, et en ce que le chanfrein d'introduction est incline selon un angle β d'environ 10 ° à 60 °, en particulier d'environ 20 ° à 45 °, et de préférence d'environ 35 °, de telle sorte que l'angle s'ouvre dans le sens opposé à la direction d'insertion de l'élément faisant saillie.

8. Outil de coupe selon l'une des revendications 1 à 7, caractérisé en ce que l'élément faisant saillie (23) est conçu de façon essentiellement cylindrique circulaire et le creux (25) de façon essentiellement circulaire.

9. Outil de coupe selon l'une des revendications 1 à 8, caractérisé en ce que l'élément faisant saillie (23) dépasse de la face inférieure (21) de la lame de coupe (7 : 7/2 7/3 : 7/4), la face inférieure (21) étant orientée vers la tête de l'outil.

10. Outil de coupe selon l'une des revendications 1 à 9, caractérisé en ce que le creux (25) est aménagé dans le corps de base (3) de la tête de l'outil.

11. Outil de coupe selon l'une des revendications précédentes, caractérisé en ce que le dispositif de fixation (19) est conçu de telle sorte que la lame de coupe (7 : 7/2 : 7/3 : 7/4) puisse être chassée dans une direction prédéterminable.

12. Outil de coupe selon la revendication 11, caractérisé en ce que la direction de la force de serrage de l'élément de blocage (29) agissant sur la surface de blocage (27) peut être prédéfinie de telle sorte que la lame de coupe (7) puisse être chassée dans une direction prédéterminable.

13. Outil de coupe selon l'une des revendications 1 à 12, caractérisé par un dispositif de réglage (45).

14. Outil de coupe selon la revendication 13, caractérisé en ce que le dispositif de réglage (45) est conçu de telle sorte que la lame de coupe (7 : 7/2 : 7/3 : 7/4) puisse être déplacée contre la force chassante prédéterminable par le dispositif de fixation (19).

15. Outil de coupe selon l'une des revendications précédentes, caractérisé par un dispositif d'éjection (39) agissant à l'opposé du dispositif de fixation (19).
